Europäisches Patentamt

European Patent Office

Office européen des brevets

(11) Publication number: **0 173 012**
A1

(12) **EUROPEAN PATENT APPLICATION**

(21) Application number: **85107508.5**

(22) Date of filing: **18.06.85**

(51) Int. Cl.⁴: **F 16 D 3/20**, F 16 D 3/26, B 62 D 1/16

(30) Priority: **23.08.84 US 643596**

(43) Date of publication of application: **05.03.86**
Bulletin 86/10

(84) Designated Contracting States: **DE FR GB IT**

(71) Applicant: **ALLIED CORPORATION, Columbia Road and Park Avenue P.O. Box 2245R (Law Dept.), Morristown New Jersey 07960 (US)**

(72) Inventor: **Ritsema, Irving Ray ALLIED CORPORATION, Law Department (Patent) 401 Bendix Drive, P.O. Box 4001 South Bend Indiana 46634 (US)**

(74) Representative: **Brullé, Jean et al, Service Brevets Bendix 44, rue François 1er, F-75008 Paris (FR)**

(54) Universal joints with conical pins.

(57) A pair of universal joints (10, 50) utilize conical pins (40; 91, 92) to secure a second shaft (30, 70) within a cavity (20, 55) in the head (14, 54) of a first shaft (12, 52). In one embodiment, the second shaft (30) has a pair of longitudinal slots (34) receiving the conical pins (40) therein, and in the other embodiment the second shaft (70) has a pair of annular ears (74) captured between curved surfaces (82) of a pair of torque seats (80) which are retained by the conical pins (91, 92).

UNIVERSAL JOINTS WITH CONICAL PINS

The present invention relates to universal joints with conical pins that enable two shaft members to rotate with their axes angularly disposed with respect to one another.

The prior art has provided many universal joint designs useful for a wide variety of applications. One application involves a tilt steering wheel wherein release of a locking mechanism enables the steering wheel of the vehicle to be tilted in accordance with the desires of the vehicle operator. After adjusting and then resecuring the locking mechanism, the operator can drive the vehicle with the steering wheel disposed at an adjusted angle.

It is desirable to provide a universal joint particularly useful in the tilt steering mechanism of a vehicle. The universal joint structure should consist of as few parts as possible, the parts being easily manufactured and assembled to provide a strong and reliable universal joint structure.

A universal joint of the present invention comprises a first shaft terminating in a head having an end face at the end of the shaft. Located within the head is an interior cavity having a curved surface and in communication with an opening in the end face. The head includes oppositely disposed threaded through openings and a pair of diametrically opposed slot openings extending longitudinally inwardly from the end face. A second shaft terminates in an end having a pair of longitudinal slots aligned with the longitudinal axis of the second shaft and extending through the end, each slot having a curved bottom portion. Outer portions or surfaces of the end of the second shaft are curved complementary to the curved surface of the interior cavity. The end of the second shaft is inserted laterally through one of the slot openings in the head of the first shaft, and then turned ninety degrees (90°) relative to the head whereby the complementary curved surface of the end slidingly

0173012

engage the curved surface of the cavity. The longitudinal slots of the end of the second shaft are placed in alignment with the through openings in the head, and a pair of pins threadedly inserted in each of the openings. The pins are advanced inwardly so that their ends extend within the cavity and are received within respective longitudinal slots, and then advanced until a preloading of the universal joint is obtained. The second shaft is free to rotate through an angle of approximately twenty degrees (20°) from the center line of the first shaft as the shafts are being rotated.

A second embodiment of the universal joint disclosed herein comprises a head of a first shaft terminating in a face having an opening in communication with an interior cavity of the head. Diametrically opposed portions of the head each include therein a pair of threaded through openings. A second shaft terminates in an end piece having a pair of oppositely disposed annular ears extending therefrom. Each of a pair of generally U-shaped torque seats terminates in surfaces curved complementary to the annular ears and each seat has a tapered through opening. The annular ears of the second shaft are slidably received between the curved surfaces of the torque seats which are disposed about the end piece and ears, this subassembly inserted within the cavity of the first shaft until the tapered openings of the seats are aligned with the through threaded openings in the head. A conical pin is threadedly inserted within one of the through openings until it is received within the aligned tapered opening of the associated torque seat, and another conical pin threadedly inserted into the other through opening until its end is received within the associated tapered opening. The threaded pins are advanced until a predetermined preloading of the joint is obtained. The universal joint transmits rotation of the shafts with the shafts disposed at an angle relative to one another.

0173012

Both of the above-described universal joints require very few component parts, the parts being relatively simple and inexpensive to manufacture, and thereby enabling easy assembly of the respective joints. The pins are in the form of threaded conical pins received within threaded openings, or a conical pin force fitted within a complementary shaped opening for frictional engagement therewith. The universal joints of the present invention eliminate free lash and permit the shafts to be rotated with their respective axes angularly disposed relative to one another.

The invention is described in detail below with reference to the drawings which illustrate the specific embodiments, in which:

Figure 1 illustrates a cross section view of a universal joint requiring only four component parts;

Figure 2 is a cross section view taken along view line 2 - 2 of Figure 1;

Figure 3 is a cross section view taken along view line 3 - 3 of Figure 1;

Figure 4 is a cross section view of a universal joint of the present invention which utilizes six component parts;

Figure 5 is a cross section view taken along view line 5 - 5 of Figure 4; and

Figure 6 is a cross section view taken along view line 6 - 6 of Figure 4.

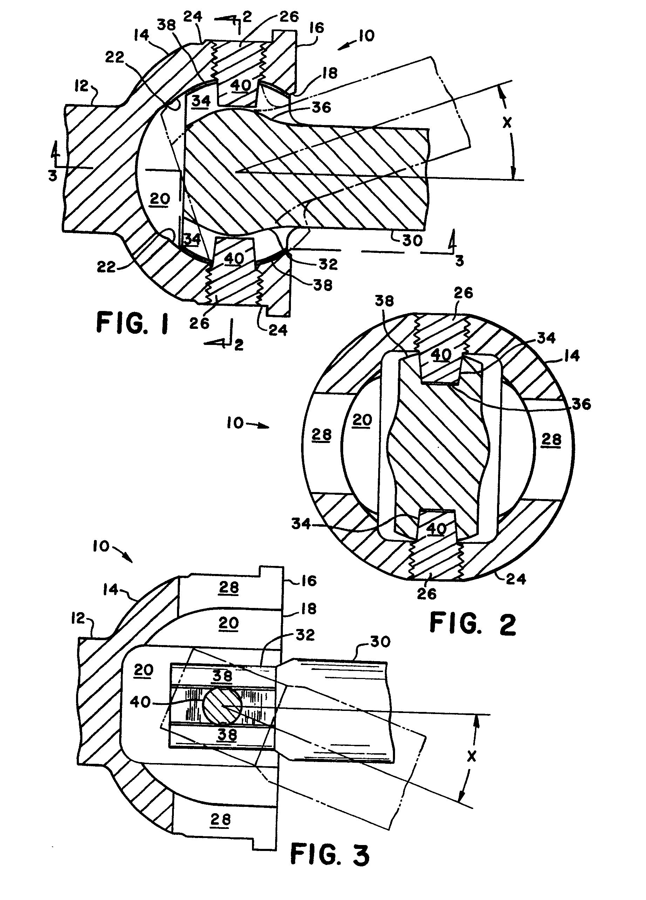

Referring to Figures 1 - 3, the universal joint is designated generally by reference numeral 10. A first shaft 12 includes a head 14 which is generally circular shaped and terminates in planer end face 16. Planer end face 16 includes an opening 18 in communication with an interior cavity 20 having curved surface 22. Oppositely disposed spaced-apart portions 24 in head 14 include threaded through openings 26 extending through head 14 into cavity 20. Head 14 includes a pair of oppositely disposed longitudinal slot openings 28 each oriented at a right angle relative to through openings 26. Second shaft 30 terminates in end 32 having a pair of longitudinal slots 34. Longitudinal slots 34 extend along the longitudinal axis of second shaft 30 and provide slots extending through the end 32, with each slot 34 including a curved bottom surface 36. Outer portions of head 32 include curved surfaces 38 shaped complementary to curved surface 22 of cavity 20. End 32 is received within the cavity so that curved surfaces 38 are in sliding engagement with curved surface 22. A pair of threaded conical pins 40 are threadedly received within respective threaded through openings 26 and extend inwardly of cavity 20 and into longitudinal slots 34. The pins 40 are received within the sloped walls of slots 34 such that inward advancement of the pins effects a preload or biasing force exerted upon the end 32. Adjustment of threaded conical pins 40 effects the desired preload forces which eliminate free lash in universal joint 10. Alternatively, one of the pins 40 may be nonthreaded and force fitted in an associated nonthreaded through opening 26 and secured therein by staking.

Universal joint 10 is assembled by inserting laterally the end 32 through a longitudinal slot opening 28 and into the cavity 20, and then rotating end 32 approximately ninety degrees (90°) whereby curved surfaces 38 are disposed in sliding contact with curved surface 22. The end 32 is rotated until the longitudinal slots 34 are each aligned with a respective threaded through opening 26. Pins 40 (or a single threaded pin 40 when the other pin is nonthreaded) are threadedly inserted through openings 26 and advanced radially inwardly into the longitudinal slots 34 whereby the lower sections of pins 40 engage the sloped walls of longitudinal slots 34. The engagement of pins 40 with their respective longitudinal slots 34 provide a preload for the joint and free lash is effectively eliminated. Second shaft 30 may be rotated through approximately twenty degrees (20°) as illustrated in Figures 1 and 3.

Referring to figures to 4 - 6, another embodiment of the universal joint of the present invention is designated generally by reference numeral 50. Universal joint 50 includes a first shaft 52 which terminates in a generally circular head 54. Shaft 52 includes planer end face 56 having an opening 58 communicating with an interior cavity 55. Opposed portions 64 of head 54 each include a through opening 66 therein. A second shaft 70 terminates in an end piece 72 which includes a pair of oppositely disposed and outwardly extending annular ears 74 with curved surfaces 76 thereabout. End piece 72 is disposed within the cavity 55 of first shaft 52, the piece 72 being captured between a pair of torque seats 80. Each torque seat 80 is generally U-shaped to include a pair of ends with curved surfaces 82 shaped complementary to curved surfaces 76 of ears 74 and has a tapered through opening 84. Annular ears 74 are captured in an intimate sliding engagement between curved surfaces 82 and a pair of conical pins 91 and 92 are each received within a respective through opening 66. Pin 91 may be nonthreaded and press fitted and fixed within an associated non-threaded through opening 66, or pin 91 and opening 66 may be threaded (as illustrated) and pin 91 advanced until its conical shaped end is received within the associated tapered through opening 84 of seat 80. Pin 92 includes a threaded portion threadedly received within the upper threaded opening 66, whereby its conical end extends within the associated tapered through opening 84 of the seat 80. Threaded pins 91 and 92 are advanced radially inwardly toward annular cavity 55 to cause the seats to be compressed toward one another until the desired preload is obtained, the curved surfaces 82 securely capturing annular ears 74 therebetween.

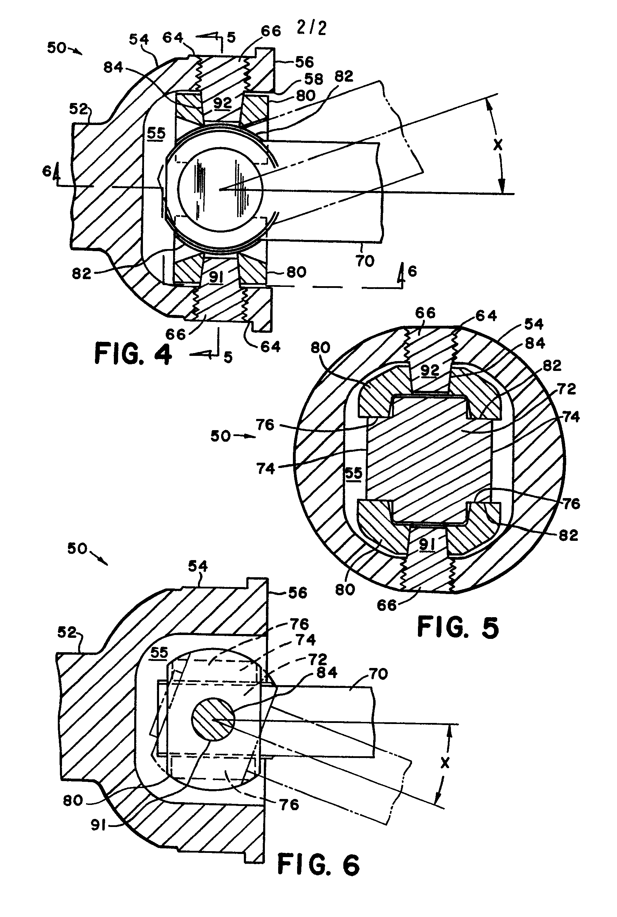

Universal joint 50 provides for movement of one shaft relative to the other through an angle of approximately twenty degrees (20°) as illustrated in Figures 4 and 6, whereby torque is transmitted from one shaft to another even though the shafts are disposed at an angle relative to one another.

- 6 -

Universal joints 10 and 50 each utilize a pair of conical pins received within complementary shaped openings in components or structure disposed within the interior cavity of the first shaft. Each universal joint may be inexpensively manufactured and easily assembled, to provide a universal joint particularly adapted for use in the tilt steering assembly of an automotive steering column. Both universal joints eliminate free lash and provide strong reliable universal joints for transmitting torque from one shaft to another even through the shafts are angularly offset relative to one another.

Although this invention has been described in connection with the illustrated embodiments, it will be obvious to those skilled in the art that various changes may be made in the form, structure , and arrangement of parts without departing from the invention.

CLAIMS

1.  A universal joint (10) comprising first (12) and second (30) members capable of being rotated with their axes angularly disposed with respect to one another, the first member (12) including a head (14) having an interior cavity (20) located therein in communication with an opening (18) at a face (16) of said head (14) and the head (14) having a pair of through openings (26), the second member (30) comprising an end (32) disposed in the cavity (20) and captured between retaining means (40) disposed in said through openings (26), characterized in that said cavity (20) has a curved surface (22) along the perimeter thereof and the end (32) of said second member comprises oppositely disposed longitudinal slots (34) aligned with the longitudinal axis of said second member (30), a curved bottom portion (36) extending along each slot (34), and curved surfaces (38) complementary with and slidingly engaging the perimetrical curved surface (22) of the cavity (20), the retaining means (40) comprising a pair of pins (40) received in the through openings (26) and extending into an associated slot (34) to maintain the end (32) of the second member (30) within the cavity (20), and thereby providing slidable, lashfree contact between the curved surfaces (22, 38) of the respective members which are angularly displaceable with respect to one another.

2.  The universal joint (10) in accordance with claim 1, wherein the pins (40) are threaded and have conical extensions received in the slots, and the through openings (26) are threaded and receive the pins (40) therein.

3.  A universal joint (50) comprising first (52) and second (70) members capable of being rotated with their axes angularly disposed with respect to one another, the first (52) member including a head (54) with an interior cavity (55) located therein in communication with an opening (58) at an end (56) of said first member (52) and a pair of diametrically opposed spaced-apart portions (64) of said head each having a through opening (66) communicating with the interior cavity (55), retaining means (92, 80) disposed in the through openings (66) and extending into the cavity (55), and the second member (70) having an end piece (72) retained by the retaining means (92, 80), characterized in that the retaining means comprises seat means (80) located in the cavity (55) and positioned by pins (92) which are received within apertures (84) in the seat means (80), the seat means (80) comprising a pair of oppositely disposed torque seats (80) which extend radially inwardly of the cavity (55) and terminate in a pair of ends having curved surfaces (82), the end piece (72) having a pair of annular ears (74) extending from opposite sides thereof and captured between the curved surfaces (82), at least one of the pins (92) being displaceable radially inwardly to provide for intimate lash-free contact between the seats (80) and the ears (74) of the second member.

4. The universal joint (50) in accordance with claim 3, wherein the openings (66) and pins (92) are threaded, the pins (92) threadedly received within the openings (66).

5. The universal joint (50) in accordance with claim 3, wherein each of said seats (80) is generally Ushaped and extends over the end piece (72) of said second member (70), whereby said curved surfaces (82) slidingly engage said ears (74).

6. The universal joint (50) in accordance with claim 3, wherein the other of said pins (92) is press fitted in the associated through opening (66).

7. The universal joint (50) in accordance with claim 3, wherein the pins (92) each have a conical extension received within a tapered aperture (84) of an associated seat (80).

**FIG. 1**

**FIG. 2**

**FIG. 3**

0173012

2/2

**FIG. 4**

**FIG. 5**

**FIG. 6**

European Patent Office

EUROPEAN SEARCH REPORT

01730012

Application number

EP 85 10 7508

## DOCUMENTS CONSIDERED TO BE RELEVANT

| Category | Citation of document with indication, where appropriate, of relevant passages | Relevant to claim | CLASSIFICATION OF THE APPLICATION (Int Cl.4) |
|---|---|---|---|
| X | US-A-1 679 700 (WYSONG) <br> * Whole document * | 1,2 | F 16 D 3/20 <br> F 16 D 3/26 <br> B 62 D 1/16 |
| A | | 4,7 | |
| | --- | | |
| X | CH-A- 243 403 (FRITSCHI) <br> * Pages 1,2; figures 1,2 * | 1 | |
| Y | | 2 | |
| | --- | | |
| X | FR-A- 618 045 (CHIRAT) <br> * Whole document * | 1 | |
| Y | | 2 | TECHNICAL FIELDS SEARCHED (Int. Cl.4) |
| | --- | | |
| X | US-A-3 798 925 (MARTUS) <br> * Whole document * | 3-5 | |
| Y | | 6,7 | F 16 D 3/00 <br> B 62 D |
| | --- | | |
| Y | DE-A-1 920 416 (D.B.A.) <br> * Whole document * | 6 | |
| A | | 1,2 | |
| | --- | | |
| Y | GB-A- 702 745 (EDWARDS) <br> * Whole document * | 7 | |
|  | -/- | | |

The present search report has been drawn up for all claims

| Place of search <br> THE HAGUE | Date of completion of the search <br> 06-11-1985 | Examiner <br> BALDWIN D.R. |
|---|---|---|

European Patent Office

**EUROPEAN SEARCH REPORT**

0173012
Application number

EP  85 10 7508

Page  2

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | --- | 2 | |
| Y | FR-A-1 166 141  (COQUILLE)<br>* Whole document * <br>--- | 3-5 | |
| Y | GB-A-  14 425<br>(LENTZ-GETRIEBE)(1909)<br>* Whole document *<br>--- | 3-5 | |
| A | GB-A-  21 570  (FETZER)(1909)<br>--- | | |
| A | US-A-1 949 859  (CHARLES)<br>--- | | |
| A | US-A-1 604 699  (CROIX)<br>---<br>----- | | TECHNICAL FIELDS SEARCHED (Int. Cl.4) |

The present search report has been drawn up for all claims

| Place of search | Date of completion of the search | Examiner |
|---|---|---|
| THE HAGUE | 06-11-1985 | BALDWIN D.R. |